# EUROPEAN PATENT SPECIFICATION

(11) **EP 2 151 475 B1**
(45) Date of publication and mention of the grant of the patent: **25.05.2011**
(21) Application number: 08425534.8
(22) Date of filing: 01.08.2008
(51) Int. Cl.: C08K 13/04, C08L 27/06, C08K 5/098, C08K 3/36

(54) **Composition comprising sodium formate for stabilizing halogen-containing polymers**
Zusammensetzung mit Natriumformiat zur Stabilisierung von halogenhaltigen Polymeren
Composition comprenant du formate de sodium pour stabiliser des polymères contenant un halogène

(43) Date of publication of application: 10.02.2010
(73) Proprietor: Reagens S.p.A., 40016 S. Giorgio Di Piano (IT)
(72) Inventor: Berna, Mario, 40137 Bologna (IT); Abbate, Orazio, 40047 Vergato (IT); Mandini, Roberto, 40051 Malalbergo (IT); Dibona, Lisa, 40018 San Pietro in Casale (IT)
(74) Representative: Cattaneo, Elisabetta

(56) References cited:
- EP-A- 0 024 353
- WO-A-2005/035707

## Description

The invention relates to a composition for stabilizing halogen-containing polymers, in particular polyvinyl chloride (PVC), and to halogenated resins in rigid and plasticized formulations comprising said stabilizing compositions. More specifically, the invention relates to a composition comprising sodium formate able to provide the final halogenated resin with excellent thermal stability.

### STATE OF THE ART

Halogen-containing polymers are known to be machined at high temperatures to produce final articles of interest. The temperatures involved however can generate a dehydrochlorination reaction, causing polymer degradation, highlighted by colour change and the loss of physical and chemical properties.

It is therefore of fundamental importance to stabilize the PVC.

For this purpose, product mixtures comprising primary stabilizers are known, i.e. substances able to slow down or block the dehydrochlorination reaction, and secondary stabilizers, i.e. substances acting as hydrochloric acid scavengers, once the degradation process has commenced.

Primary stabilizers include metal soaps and organometallic compounds (Plastic Additives Handbook, R.Gatcherand H.Muller, Carl Hanser Verlag, 5th Edition, 2001, pages 442-456). Those thermal stabilizers containing metals include compounds wherein the metal is lithium, sodium, potassium, magnesium, calcium, strontium, cadmium, barium, manganese, aluminium, tin, lead, bismuth or antimony. The use of traditional stabilizers containing heavy metals such as lead, barium or cadmium is now anachronistic and has been replaced by the development of stabilizers without heavy metals such as those based, for example, on combinations of metal soaps of calcium and zinc.

The document FR2289555 describes for example a stabilization mixture for chlorinated plastic materials comprising calcium or zinc salts of linear or branched saturated aliphatic monocarboxylic acids, preferably C₆-C₁₈ aliphatic monocarboxylic acids, and liquid organic phosphites.

Organometallic compounds can also be cited, for example organotin compounds, which generally offer considerable performance, such that it is normally difficult to further increase efficiency.

There is however still a requirement for new stabilizing mixtures or new molecules presenting considerable thermal stabilization capacity while at the same time being industrially advantageous from both the industrial scalability and cost viewpoints.

Alternatively, the literature proposes polymer prestabilization, by introducing, during the polymerization stage, suitable agents which should lead to a polyvinyl chloride with improved stability characteristics for subsequent machining. GB1435579 proposes for example a thermoplastic moulding material aimed at stabilization of polyvinyl chloride obtained by emulsion polymerization. Specifically, the inventors propose adding zinc, magnesium or calcium formate to the polymer emulsion, together with a stabilizer to improve stabilization.

A further example of prestabilization is described in EP0024353. According to the teaching contained in such a document, an aqueous or alcoholic solution of a formate salt of sodium, magnesium or calcium and of a bisphenol derivative is added to the wet polyvinyl chloride at the end of the polymerization process. The document states that after drying, a polymer is obtained with decidedly good thermostability characteristics.

This type of prestabilization has not however found widespread industrial use, presumably because of the intrinsic difficulty of introducing the formate salt to the wet polyvinyl chloride and because it requires the use of bisphenol A, the use of which is not recommended in polyvinyl chloride production as it does not conform to provisions for contact with foods.

Among formic acid salts, sodium formate is a considerably hygroscopic deliquescent solid with high water solubility (97 g per 100 ml at 20ºC). These characteristics mean that it is of interest only in solution form in chlorinated polymer prestabilization, as each attempt to grind the product to obtain uniform particle size distribution compatible with dispersion within a polymer matrix have always proved unsuccessful. Because of its hygroscopicity it tends to coagulate, without then being able to disperse within the polymer.

On the other hand, sodium formate in aqueous solution exhibits considerable stabilizing action, however the water present in solution makes it impossible to use in normal PVC processing for the known reasons of incompatibility with the mass, which therefore undergoes rheology modification, formation of defects in the article such as surface irregularities and inefficient welding of rigid articles, such as profiles.

There is therefore felt the need of a sodium formate-based product for stabilizing chlorinated polymers, in particular polyvinyl chloride, which is however of solid form, easily meterable in the final polymer working process and presenting good storage stability, notwithstanding its considerable hygroscopicity.

The object of the present invention is therefore to thermally stabilize halogen-containing polymers on working, slowing down degradation during working, without compromising the normal working stages of the halogen-containing polymer.

### SUMMARY OF THE INVENTION

The applicant has surprisingly found that the sodium formate salt suitably treated to obtain a powder can be advantageously used as a stabilizer for halogen-containing polymer formulations.

The aforestated object has hence been achieved by a composition for stabilizing halogen-containing polymers comprising:
- sodium formate,
- at least one C₁₀-C₂₄ fatty acid or a salt thereof with a metal selected from the metals of Groups I and II of the Periodic table, and
- an amorphous synthetic silica with BET area > 50 m²/g,
wherein the composition is in the form of a powder having particles with granulometric distribution indices D50 in the range from 2 to 60 µm and D90 less than or equal to 100 µm.

According to another aspect, the invention relates to a process for preparing the composition of the invention comprising the steps of:
a) preparing a mixture of an aqueous solution of sodium formate, at least one C₁₀-C₂₄ fatty acid or a salt thereof with a metal selected from the metals of Groups I and II of the Periodic table, and an amorphous synthetic silica with BET area > 50 m²/g;
b) removing the water and drying the product thus obtained;
c) subjecting the product to grinding to obtain a powder having particle size distribution indices D50 in the range from 2 to 60 µm and D90 less than or equal to 100 µm.

According to yet a further aspect, the invention relates to a halogenated resin in rigid or plasticized formulation comprising a halogen-containing polymer and the composition of the invention.

In a preferred embodiment, the halogen-containing polymer is polyvinyl chloride (PVC).

### DESCRIPTION OF THE FIGURES

The invention is described in detail hereinafter with reference to the accompanying figures wherein:
Figure 1 is a graph of thermal stabilization DE against time in formulations 1-4 of example 1;
Figure 2 is a graph of thermal stabilization DE against time in formulations 5-8 of example 2;
Figure 3 is a graph of thermal stabilization DE against time in formulations 9-11 of example 3; and
Figure 4 is a graph of thermal stabilization DE against time in formulations 12 and 13 of example 4.

### DETAILED DESCRIPTION OF THE INVENTION

The invention therefore concerns a composition for stabilizing halogen-containing polymers comprising sodium formate, at least one C₁₀-C₂₄ fatty acid or a salt thereof with a metal selected from the metals of Groups I and II of the Periodic table, and an amorphous synthetic silica with BET area > 50 m²/g wherein the composition is in the form of a powder having particles with granulometric distribution indices D50 in the range from 2 to 60 µm and D90 less than or equal to 100 µm.

In the present invention, the term:
- "halogen-containing polymer" means polyvinyl halides, including vinyl chloride polymers; more preferably the halogen-containing polymer is polyvinyl chloride or chlorinated polyvinyl chloride (C-PVC);
- "halogenated resin in rigid formulation" means a halogen-containing polymer formulation substantially free of plasticizer compounds; and
- "halogenated resin in plasticized formulation" means a halogen-containing polymer formulation with added plasticizer compounds.

The quantities of ingredients of the composition of the invention are expressed in parts by weight per 100 parts by weight of the halogen containing polymer in the final halogenated resin in rigid or plasticized formulation.

The composition of the invention comprises as essential element the sodium salt of formic acid. It is present in the composition in an amount in the range from 0.1 to 5.0 parts by weight, preferably from 0.2 to 1.5 parts by weight, per 100 parts by weight of halogen-containing polymer (phr).

According to the invention, the stabilization composition also comprises at least one C₁₀-C₂₄ fatty acid or a salt thereof with a metal selected from the metals of Groups I and II of the Periodic table.

Preferably the C₁₀-C₂₄ fatty acid is selected from the group consisting of lauric acid, stearic acid, oleic acid, elaidic acid, linoleic acid and linolenic acid. The composition of the invention can contain the C₁₀-C₂₄ fatty acid in the form of salt of a metal selected from the metals of Groups I and II of the Periodic table.

Preferably the C₁₀-C₂₄ fatty acid salt is a salt of a metal selected from the group consisting of sodium, potassium and calcium.

The C₁₀-C₂₄ fatty acid or a salt thereof with a metal selected from the metals of Groups I and II of the Periodic table is preferably present in the composition in an amount in the range from 0.01 to 2 parts by weight, preferably from 0.02 to 0.5 parts by weight, per 100 parts by weight of halogen-containing polymer (phr).

More preferably the C₁₀-C₂₄ fatty acid salt of the invention is sodium stearate.

The composition of the invention also comprises an amorphous synthetic silica with BET area > 50 m²/g. More preferably the amorphous synthetic silica of the invention has a BET area > 100 m²/g.

It is present in the composition in an amount in the range from 0.001 to 0.25 parts by weight, preferably from 0.01 to 0.1 parts by weight, per 100 parts by weight of halogen-containing polymer (phr).

Preferably the amorphous synthetic silica with BET area > 50 m²/g is hydrophilic or hydrophobic pyrogenic silica. Pyrogenic silica is silicon dioxide, an amorphous substance produced synthetically in an essentially anhydrous state by a vapour phase hydrolysis process.

The composition of the invention is in the form of a powder having particles with granulometric distribution indices D50 in the range from 2 to 60 µm and D90 less than or equal to 120 µm. These indices are determined by particle size distribution analysis. Preferably, the composition of the invention in the form of powder has particle distribution indices D50 from 2 to 40 µm and D90 of about 50 µm. Without being bound to any theory, the inventors of the present invention have permitted the use of sodium formate as stabilizer for halogen-containing polymers, preferably PVC, by treatment with substances, such as a fatty acid salt and amorphous synthetic silica, which have improved its dispersibility within the polymer matrix and have acted as coadjuvants in the grinding step by preventing particle agglomeration phenomena.

Under another aspect, the invention concerns a process for preparing the composition of the invention comprising the steps of:
a) preparing a mixture of an aqueous solution of sodium formate, at least one C₁₀-C₂₄ fatty acid or a salt thereof with a metal selected from the metals of Groups I and II of the Periodic table, and an amorphous synthetic silica with BET area > 50 m²/g;
b) removing the water and drying the product thus obtained; and
c) subjecting the product to grinding to obtain a powder having particles size distribution indices D50 in the range from 2 to 60 µm and D90 less than or equal to 100 µm.

In step c) the powder, after being ground, can be subjected to classification, i.e. a process of separating the coarse particles from the fine particles, enabling the coarse particles to be fed to the grinder for further grinding.

The composition of the invention can also comprise one or more conventional stabilizing and co-stabilizing agents selected from the group consisting of metal soaps, organotin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, ß-aminocrotonic acid esters and organic co-stabilizers such as b-diketones, acetylacetonates, dihydropyridines, polydihydropyridines and uracil derivatives. These stabilizing and co-stabilizing agents can be added either to the mixture of the invention in step a) or afterwards together with the halogen-containing polymer, preferably added afterwards together with the halogen-containing polymer.

The composition of the invention or the formulation with halogen-containing polymer comprises preferably one or more stabilizers. The stabilizer is preferably contained in the stabilization composition of the invention in an amount in the range from 0.05 to 4 parts by weight of halogen-containing polymer. Preferably the stabilizers contained in the composition of the invention are combinations of metal soaps and/or organotin compounds, polyols, antioxidants and organic stabilizers.

The following can be cited as non-limiting examples of stabilizers:

### Metal soaps

All metal soaps used as polyvinyl chloride (PVC) stabilizers are suitable for the invention. These are preferably organic sodium, lithium, potassium, calcium, zinc, magnesium, aluminium salts of saturated C₂-C₂₂ aliphatic carboxylates, unsaturated C₃-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates unsubstituted or substituted with at least one OH group and/or substituted with C₁-C₁₆ alkyl, naphthylcarboxylates unsubstituted or substituted with at least one OH group and/or substituted with C₁-C₁₆ alkyl, phenyl (C₁-C₁₆) alkylcarboxylates, naphthyl (C₁-C₁₆) alkylcarboxylates, or phenolates unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane -1,10-dicarboxylic acid, lactic acid, malonic acid, maleic acid, tartaric acid, oxalic acid, salicylic acid, phthalic acid, isophthalic acid, terphthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP3275570; and colophonic acids (rosin acids such as abietic acid), and superbasic carboxylates.

Metal soaps preferred in the present invention are metallic carboxylates of a carboxylic acid containing from 2 to 25 carbon atoms, being typically acetates, benzoates, or alkanoates, and preferably C8-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, zinc or calcium soaps.

Zn, Li, K, Mg, Ca, Na salts of the aforestated fatty acids containing from 2 to 25 carbon atoms are preferably added to the composition of the invention.

The aforedescribed metal soaps or metal soap mixture can be present in the composition preferably in an amount in the range from 0.05 to 3 parts by weight, more preferably from 0.1 to 1.0 parts by weight, per 100 parts by weight of polymer.

### Organtin compounds

The organotin compounds represent a particularly well known and extensively used class of metal-containing thermal stabilizers for halogenated vinyl polymers.

This class comprises one or more tetravalent tin atoms, each of which has at least one direct tin-carbon bond. A preferred class of tin-containing thermal stabilizers has one or more tetravalent tin atoms, each of which has at least one direct tin-oxygen or tin-sulphur bond, i.e. containing the group: 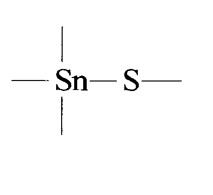 or

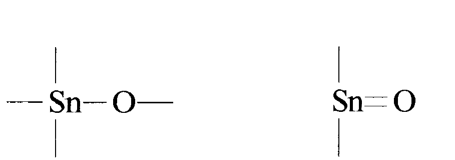

The organotin compounds preferred in the invention comprise those containing one or more tetravalent tin atoms having at least one direct tin-carbon bond and wherein the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, with the proviso that at least one valency is satisfied by a bond with oxygen or sulphur or a mixture of the two. Examples of compounds of this type are: alkyl tin mercaptides, the product of reacting an organotin halide with a sulphur of an alkaline metal and mercaptide, mercaptoacid ester, mercaptoalcohol, mercaptoalcohol ester or mixtures thereof.

Another class of tin-comprising stabilizers included in the present invention is that of compounds not containing sulphur, wherein the tin is bound to oxygen. This group includes, by way of non-limiting example, dibutyltin maleate, dibutyltin di(stearyl maleate), dioctyltin maleate, organotin carboxylates or organotin alkoxides.

The stabilizing composition of the present invention can comprise organotin compounds preferably in an amount in the range from 0.1 to 4 parts by weight, more preferably from 0.15 to 2.0 parts by weight, per 100 parts by weight of polymer.

### Non-metal stabilizers

Metal-free stabilizers include esters of β-aminocrotonic acid.

Among these compounds for example stearyl ester of β-aminocrotonic acid, 1,4 butanediol di(β-aminocrotonic acid) ester, thio-diethanol-β-aminocrotonic acid ester are considered.

### Perchlorates and perfluoroalkanesulphonates

The polymer stabilization composition can also include a compound selected from the group consisting of M(ClO₄)ₖ and (CF₃SO₃)ₙM wherein M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M.

M is preferably selected from the group consisting of Li⁺, Na⁺, K⁺, Mg²⁺, Ca²⁺ and Zn²⁺, more preferably M is selected from the group consisting of Na⁺, K⁺ and Ca²⁺, and still more preferably is sodium.

The perchloric acid or perchlorate salt, preferred for the purposes of the invention, can be used in various forms, for example as salts or aqueous or organic solutions, supported on various materials such as PVC, calcium silicate, zeolites or hydrotalcites or bound to a hydrotalcite by chemical reaction.

The preferred perchlorites for the invention are complexes of metal perchlorate, more preferably sodium perchlorate, with triethylene glycol, butyldiglycol or polyethylene glycol.

The perchloric acid or its salt is preferably included in the composition of the invention in an amount in the range from 0.001 to 2 parts by weight, more preferably from 0.005 to 1 part by weight, per 100 parts by weight of polymer. The stabilization composition of the invention can also comprise (CF₃SO₃)ₙM. Advantageously, (CF₃SO₃)ₙM is trifluoromethanesulphonic acid or a sodium salt thereof, more preferably it being sodium trifluoromethanesulphonate.

### Sodium adipate

The composition of the invention can comprise the salt disodium adipate for stabilizing the halogen-containing polymer. It is present in the composition in an amount in the range from 0.01 to 5 parts by weight, preferably from 0.02 to 2 parts by weight, per 100 parts by weight of polymer.

The composition of the invention can also comprise other additives able to behave as co-stabilizers, selected from the group consisting of antioxidants, organic co-stabilizers (b-diketones and dihydropyridines or polydihydropyridines, uracil derivatives), alkanolamines, zeolites and hydrotalcites, polyols, hydrates and oxides of alkaline and alkaline-earth metals and organic phosphites.

### Antioxidants

The organic antioxidants used in the present invention are selected from those already known as additives for plastic materials. For the purposes of the invention, preferred are one or more antioxidants selected from the group consisting of alkylidenebisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols. Particularly preferred according to the invention are 2,2'-methylene-bis(6-tert-butyl-4-methylphenol), commercially available as Lowinox® 22 M46 produced by Great Lakes Chem. Corp., and esters of β-(3,5-di-tert-.butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are comprised preferably in an amount in the range from 0.01 to 1.0 parts by weight, more preferably from 0.1 to 0.5 parts by weight, per 100 parts by weight of polymer.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from: 1) β-diketonic compounds, 2) dihydropyridines or polydihydropyridines, 3) uracil derivatives.
1. β-diketonic compounds: The 1,3-dicarbonyl compounds advantageously present in the composition of the invention are linear or cyclic dicarbonyl compounds. Among these, particularly preferred are the dicarbonyl compounds of formula: 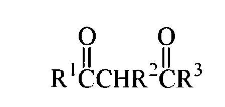 wherein
   R¹ is C₁-C₂₂ alkyl, C₅ -C₁₀ hydroxyalkyl, C₃-C₇ alkenyl, phenyl, phenyl substituted by OH, by C₁-C₄ alkyl or by C₁-C₄ halogenalkyl, C₇-C₁₀ phenylalkyl, C₅ -C₁₂ cycloalkyl, C₅-C₁₂ cycloalkyl substituted with C₁-C₄ alkyl.
   R² is hydrogen, C₁-C₈ alkyl, C₃-C₇ alkenyl, C₂-C₁₂ phenyl, C₇-C₁₂ alkylphenyl, C₇-C₁₀ phenylalkyl.
   R³ has the same meaning as given to R¹.
   Particularly preferred are dibenzoylmethane, stearoylbenzoylmethane, dehydroacetic acid and complexes of acetylacetone with metals such as Ca and Zn.
2. Dihydropyridines (DHP) or polydihydropyridines (polyDHP). Of those monomeric dihydropyridine derivatives preferred according to the invention, carboxylic acids esters can be cited whose formula can be generally indicated by: 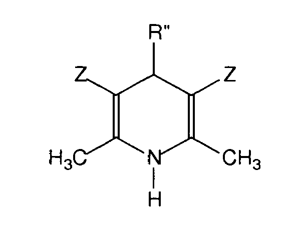 wherein Z is CO₂C₂H₅, CO₂(n-C₁₂H₂₅), R" is hydrogen, C₁-C₁₈ alkyl, C₂ -C₁₈ alkoxycarbonyl or C₆ -C₁₀ aryl.
   Particularly preferred are 3-bisdodecyloxycarbonyl-2,6-dimethyl-1,4-dihydropyridine, commercially available as Stavinor® D507.
   Suitable preferred polydihydropyridines are compounds represented by the following formula: 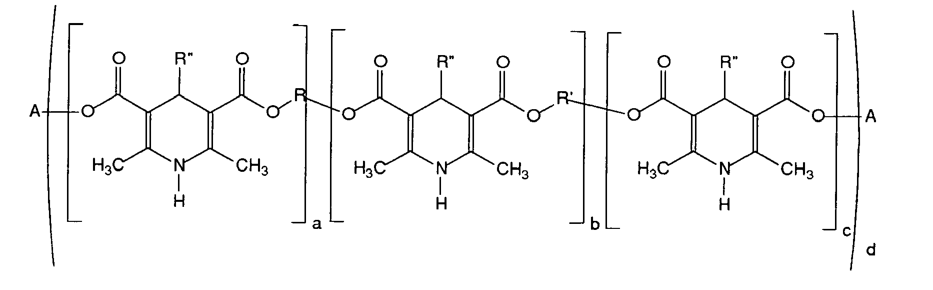 wherein A is C₁-C₂₂ alkyl, optionally substituted with C₁-C₁₈ alkoxy, C₁-C₁₈ alkylthio, hydroxyl, acryloyloxy, methacryloyloxy, halogen and phenyl,
   a and b are numbers from 0 to 20,
   c is 0 or 1,
   d is a number from 1 to 6 and the conditions d(a+b+c)>1 and a+b>0 are respected, R and R' are, each independently of the other, methylene or phenylene or an alkylene of the type (-CᵣH₂ᵣ-X-)ₛCᵣH₂ᵣ-,
   r is a number from 2 to 18
   s is a number from 0 to 10
   X is oxygen or sulphur
   R" is hydrogen, C₁ -C₁₈ alkyl, C₂-C₁₈ alkoxycarbonyl or C₆-C₁₀ aryl.
   Particularly preferred is thiodiethylene-bis[5-methoxycarbonyl-2,6-dimethyl-1,4-dihydropyridine-3-carboxylate] known commercially as Synesal^{®} M.
3. Uracil derivatives.
   The uracil derivatives advantageously present in the composition of the invention are described by the following general formula: 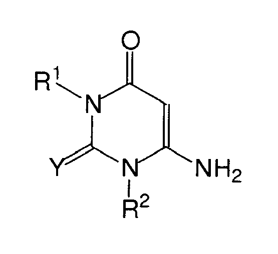 wherein
   R¹ and R² are, each independently of the other, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or with chlorine atoms; Y can be oxygen or sulphur. Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl. Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl.

Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted by one or two substituents, preferably selected from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, wherein R¹ and R² are, each independently of the other, C₁-C₄ alkyl and hydrogen; in particular, the compound wherein R¹ and R² are methyl is preferred.

Preferred is 1,3 dimethyl 6 amino uracil.

Among the uracil derivatives there can also be optionally present in the composition of the invention oligomeric or polymeric derivatives of formula: 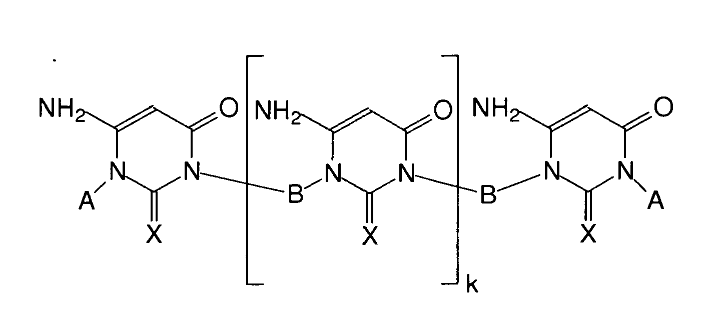 wherein
A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic antioxidants can be present preferably in an amount in the range from 0.01 to 1.0 parts by weight, in particular from 0.1 to 0.5 parts by weight, per 100 parts by weight of polymer.

### Alkanolamines

The alkanolamines, advantageously present in the composition of the invention, are compounds of general formula: 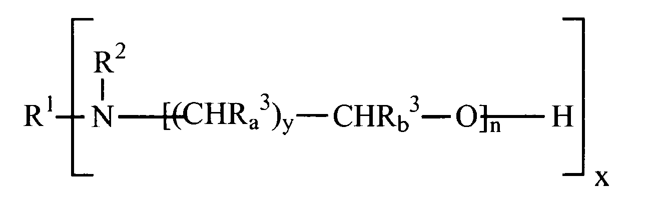 wherein
x=1,2,3
y=1,2,3,4,5 or 6
n=1-10
R¹ and R² are independently H, C₁-C₂₂ alkyl,

[(CHRₐ³)_{y}-CHR_{b}³-O]ₙ-H, [(CHRₐ³)y-CHR_{b}³-O]ₙ-CO-R¹

C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or
when x=1, R¹ and R² can be additionally combined with nitrogen to form a cyclo of 4-10 carbon atoms and optionally up to 2 heteroatoms, or
when x=2, R¹ can additionally be C₂-C₁₈ alkylene, which can be hydroxyl-substituted to both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂-X-R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines are those wherein Rₐ³, R_{b}³ are, each independently of the other, H or methyl, and y=1.

Examples of preferred alkanolamines according to the general formula are: tri(hydroxyethyl)amine, tri(hydroxypropyl)amine.

The aforedescribed alkanolamines can be present preferably in an amount in the range from 0.01 to 1.0 parts by weight, in particular from 0.1 to 0.5 parts by weight, per 100 parts by weight of polymer, and are preferably used in combination with perchlorates and perfluoroalkanesulphonates.

### Hydrotalcites

The hydrotalcites optionally present in the compositions of the invention can be described by the general formula:

[M²⁺₁₋ₓM³+ₓ(OH)₂]^{x+}[Aⁿ⁻_{x/n}mH₂O]^{x-}

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
0.2<x≤0.33
m>0

In the general formula above, Aⁿ represents an anion selected from the group consisting of CO₃²⁻, OH⁻, HCO³⁻, ClO⁻₄; an acetate ion(-), a salicylate ion(-), a tartrate ion(2-), and

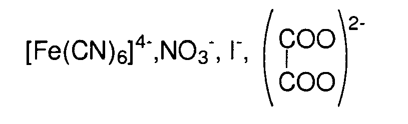

Preferred of the hydrotalcites of the invention are those wherein Aⁿ⁻ is selected from CO₃²⁻, OH⁻.

The preferred empirical hydrotalcite formulas considered for the invention are: Mg₆Al₂(OH)₁₆CO₃.4H₂O

Mg₄Al₂(OH)₁₂CO₃.3H₂O

The aforedescribed hydrotalcites can be present in the composition of the invention preferably in an amount from 0.1 to 3 parts by weight, in particular from 0.2 to 1 parts by weight, per 100 parts by weight of halogen-containing polymer.

### Zeolites

The zeolites optionally present in the compositions of the invention can be described by the general formula:

M q/a [(AlO2)q (SiO2)r] ·wH₂O

wherein a is the charge on the cation M,
M is an element of the group of alkali or alkaline-earth metals, in particular Na, K. Mg,
q is a number greater than or equal to 2,
the ratio q/r is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are those zeolites having a particle size mainly in the range from 0.5 to 10 micron.

The preferred zeolites, which are known *per se,* have an effective mean cavity diameter of 3-5 Aº and can be prepared by known methods.

Also particularly preferred are zeolites of type NaA, which have an effective mean cavity diameter of 4 Aº, and are hence known as 4A zeolites, indicated by the formula:

Na₁₂ Al₁₂ Si₁₂ O₄₈·27H₂O

Particular preference is given to those zeolites satisfying the aforestated general formula, known as X zeolites and indicated by the formula

(Na₂,Ca,Mg)₂₉Al₅₈Si₁₃₄O₃₈₄·240H₂O

The zeolites optionally present in the composition of the invention are present preferably in an amount from 0.1 to 3 parts by weight, more preferably from 0.2 to 1 parts by weight, per 100 parts by weight of polymer.

### Polyols

Of the polyols, optionally present in the composition of the invention, the following are preferred:
pentaerythritol, dipentaerythritol, trimethylolpropane, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate.

Most preferred of these compounds are tris(hydroxyethyl)isocyanurate (THEIC), pentaerythritol, dipentaerythritol, tripentaerythritol, bistrimethylolpropane, sorbitol. The polyols, if present, are present preferably in an amount in the range from 0.01 to 2 parts by weight, more preferably from 0.1 to 1 parts by weight, per 100 parts by weight of halogen-containing polymer.

### Hydrates and oxides of alkali and alkaline-earth metals

Among the hydrates and oxides of alkali and alkaline-earth metals, optionally present in the composition of the invention, the following are preferred:
lithium oxide, sodium oxide, potassium oxide, magnesium oxide, calcium oxide and lithium hydroxide, sodium hydroxide, potassium hydroxide, magnesium hydroxide, calcium hydroxide.

The hydrates and oxides of alkali and alkaline-earth metals, if present, are preferably in an amount in the range from 0.1 to 3 parts by weight, more preferably from 0.2 to 1 parts by weight, per 100 parts by weight of polymer.

### Phosphites

The phosphites, optionally present in the composition of the invention, are preferably organic phosphites of general formula P(OR)₃, wherein the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, wherein the radicals R are identical or different and selected from C₆-C₁₈ alkyl, C₆-C₁₈ alkenyl, phenyl, mono- or di-alkylphenyl, or C₅-C₇ cycloalkyl. Phosphites with the following general formula can also be present in the composition of the invention: 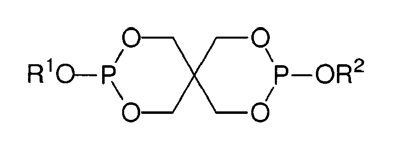 wherein R¹ and R² are identical or different and are C₆-C₁₈ alkyl, C₆-C₁₈ alkenyl, phenyl, mono- or di-alkylphenyl, or C₅-C₇ cycloalkyl. Preferred of these latter phosphites are those wherein R¹,R² = stearyl or

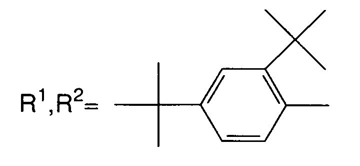

Phosphites with the following general formula can also be present:

(R¹ O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyll)phosphite), diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂-₁₅ alcohol) phosphite, bis(2,4-di-t-butylphenyl)pentaerythritol diphosphite, distearyl pentaerythritol diphosphite.

The phosphites, if present, are preferably in an amount in the range from 0.1 to 2 parts by weight, more preferably from 0.2 to 0.5 parts by weight, per 100 parts by weight of polymer.

Under another aspect, the invention therefore relates to a halogenated resin comprising the composition of the invention and a halogen-containing polymer.

The composition for stabilizing the halogen-containing polymers of the invention provides the resultant halogenated resin with excellent thermal stability properties, in particular an excellent long-term stability, simultaneously with an excellent initial colour and good retention thereof in the final halogenated resin.

The stabilized halogenated resin, preferably stabilized polyvinyl chloride (PVC), according to the present invention can be used in formulations for extrusion, injection moulding, blow moulding, calendaring, and can be formed into finished articles such as fibres, ducting, engineering profiles and window profiles, pipes and connectors, film, sheets and bottles.

The composition of the present invention comprising sodium formate can be advantageously used in the production of transparent and non-transparent articles. The halogen-containing polymer can be used to obtain semirigid or plasticized articles. For this purpose, the halogen-containing polymer, preferably polyvinyl chloride, can receive added plasticizer substances.

Examples of preferred plasticizer substances, in the case of polyvinyl chloride, are esters of C₄-C₂₀ alcohols such as adipates, phthalates, trimellitates, azelates, sebacates, benzoates, phosphates, epoxidates, typically epoxidized soya oil, polymeric plasticizers such as polyesters, polyadipates and polyphosphates. The plasticizer quantity varies widely according to the final use of the plasticized resin, said quantity being preferably in the range from 5 to 120 parts by weight per 100 parts by weight of halogen-containing polymer, preferably polyvinyl chloride (PVC), more preferably from 20 to 70 parts by weight per 100 parts by weight of halogen-containing polymer, preferably PVC.

The halogenated resin according to the invention, in particular polyvinyl chloride (PVC) or chlorinated polyvinyl chloride (C-PVC) can also comprise additives selected from the group consisting of dyes, pigments, antiflame agents, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing, and exposure to light.

Some embodiments of the invention follow, with examples of evaluation of the benefits deriving from the stabilizer composition of the invention, provided as non-limiting examples of the invention.

### EXAMPLES

### Preparation of the composition according to the invention

1000 g of sodium formate in crystals were dissolved at ambient temperature with 600 g of demineralised water in a suitable horizontal reactor provided with a screw mixer. Heating then proceeded to 65ºC at which stage 60 g of powered sodium stearate were added and the mixture maintained under agitation for 30 minutes. 60 g of pyrogenic silica with BET area 200 m²/g were then introduced and the agitation intensity was increased until a gel was obtained.

After about 20 minutes, the water was distilled off at a temperature of about 100ºC, while applying vacuum gradually until a maximum vacuum of 150 mmHg; these conditions were maintained for 2 hours to dry the product. After drying, the product was ground with a knife mill. The product obtained had a fine particle size distribution with a particle index D50 of 40 micron and a particle index D90 of 50 micron.

### Preparation of formulations containing PVC and the composition according to the invention

The stabilizing compound of the invention was added to polyvinyl chloride together with other additives to obtain rigid and plasticized formulations, which were then subjected to static thermal stability tests and congo red (CR) thermal stability tests.

### Static thermal stability test

The static thermal stability of PVC compositions stabilized with the product of the invention was measured by static thermal stability tests by the method described below.

Rigid PVC formulations containing stabilizing compounds as indicated in the following example were worked by lamination in a cylinder mixer for 3 minutes at 190ºC.

Rectangular samples (1.5x24 cm) were cut from each sheet (of thickness 0.3-0.5 mm). The samples were fixed on the sliding trolley of a Werner Mathis dynamic oven, temperature-controlled at 180ºC or 190ºC and heated. The trolley emerged from the oven at a rate of 0.5 cm every 2 minutes.

At regular 10 minute intervals, the degree of colour change was judged by reading with an X-Rite QA2000 colorimeter: the colour difference was measured in the Lab colour space as a single numerical value expressed as DE.

DE=[(DL)²+(Da)²+(Db)²]^{½}

where L is the variable lightness, a and b are the chromaticity coordinates, and DL, Da, Db are the respective differences in L, a, b between the final state and the initial state at time zero.

The higher the value, the greater the degradation.

### Congo red thermal stability determination test

The thermal stability was also determined by measuring the congo red (CR) value. The congo red value was obtained in accordance with DIN VDE 0472(614). According to this standard, 50 mg of PVC sample obtained from the sheet were placed in a test-tube and temperature-controlled at 180ºC. The time required for the sample to release HCl was then measured by noting the moment wherein the pH 3 colour change occurred on an indicator paper placed in the top of the test-tube.

### Example 1.

The ingredients in the quantities indicated in Table 1 were homogeneously mixed to prepare the stabilized rigid PVC formulation of example 1. The ingredient quantities in Table 1 are expressed in parts by weight per 100 parts by weight of PVC (phr). The formulations from 1 to 3 were comparison formulations while formulation 4 contained the stabilizing composition of the invention.

**Table 1: Ingredients of formulations 1-4**

| | Formulation 1 | Formulation 2 | Formulation 3 | Formulation 4 |
|---|---|---|---|---|
| Ingredients | | | | |
| PVC K57 | 100 | 100 | 100 | 100 |
| Zinc stearate | 0.5 | 0.5 | 0.5 | 0.5 |
| Calcium stearate | 0.5 | 0.5 | 0.5 | 0.5 |
| Paraffin wax | 0.2 | 0.2 | 0.2 | 0.2 |
| Realube SD* | 0.3 | 0.3 | 0.3 | 0.3 |
| Sodium formate powder | | 0.5 | | |
| Sodium formate 50% aq. solution | | | 1 | |
| Stabilizing composition of the invention | | | | 0.5 |

| | | | | |
|---|---|---|---|---|
| *Realube SD: distearyl phthalate | | | | |

The sheet samples of formulations 1-4 were subjected to the static stability test at 190 °C and to the congo red stability test.

The evaluation results are in Table 2.

**Table 2: Evaluation of formulations 1-4**

| | Formulation 1 | Formulation 2 | Formulation 3 | Formulation 4 |
|---|---|---|---|---|
| Congo red (minutes) | 8 | 9 | 14 | 16 |

| Static thermal stability | | | | |
|---|---|---|---|---|
| minutes | DE | DE | DE | DE |
| 0 | 0 | 0 | 0 | 0 |
| 10 | 12.21 | 15.71 | 32.05 | 14.91 |
| 20 | 18.46 | 20.78 | 47.37 | 33.31 |
| 30 | degr | degr | 41.34 | 31.9 |
| 40 | | | degr | 23.91 |
| 50 | | | | degr |

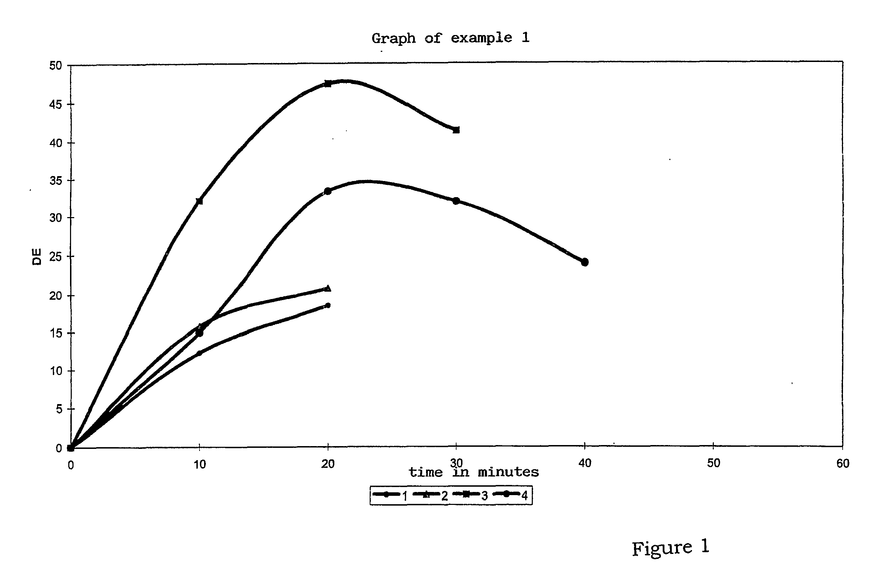

The sample treated with the stabilizing compound of the invention not only presented a higher congo red value, but degraded in the static thermal stability test after 50 minutes, being a better result than the polymer formulation comprising the commercial sodium formate powder or a 50% aqueous solution thereof. Compared with this latter the resin of the invention could be worked without encountering the numerous problems arising by the presence of water during working. The thermal stability DE values have been shown in graphical form in Figure 1. As is apparent from Figure 1, formulation 4 of the invention presented a decidedly better static thermal stability profile than the comparison formulations 1-3.

### Example 2

The ingredients in the quantities indicated in Table 3 were homogeneously mixed to prepare the stabilized plasticized PVC formulation of example 2. The ingredient quantities in Table 3 are expressed in parts by weight per 100 parts by weight of PVC (phr). The formulations 5 to 7 were comparison formulations while formulation 8 contained the stabilizing composition of the invention.

**Table 3: Ingredients of formulations 5-8**

| | Formulation 5 | Formulation 6 | Formulation 7 | Formulation 8 |
|---|---|---|---|---|
| Ingredients | | | | |
| PVC K57 | 100 | 100 | 100 | 100 |
| Diisodecyl phthalate | 50 | 0.5 | 0.5 | 0.5 |
| Zinc stearate | 0.5 | 0.5 | 0.5 | 0.5 |
| Calcium stearate | 0.5 | 0.2 | 0.2 | 0.2 |
| Stearic acid | 0.1 | 0.3 | 0.3 | 0.3 |
| Sodium formate powder | | 0.5 | | |
| Sodium formate 50% aq. solution | | | 1 | |
| Stabilizing composition of the invention | | | | 0.5 |

The sheet samples of formulations 5-8 were subjected to the static stability test at 190 °C and to the congo red stability test. The evaluation results are in Table 4.

**Table 4: Evaluation of formulations 5-8**

| | Formulation 5 | Formulation 6 | Formulation 7 | Formulation 8 |
|---|---|---|---|---|
| Congo red (minutes) | 13 | 15 | 47 | 42 |

| Static thermal stability | | | | |
|---|---|---|---|---|
| minutes | DE | DE | DE | DE |
| 0 | 0 | 0 | 0 | 0 |
| 10 | 0.2 | 0.28 | 0.48 | 0.29 |
| 20 | 0.93 | 1.5 | 2.72 | 1.79 |
| 30 | 2.8 | 3.84 | 10.22 | 6.22 |
| 40 | 9.2 | 7.33 | 17.65 | 13.83 |
| 50 | | 18.25 | 19.19 | 19.8 |
| 60 | | | 20.24 | 22.05 |
| 70 | | | 20.9 | 22.95 |
| 80 | | | 20.25 | 22.34 |
| 90 | | | 19.92 | 23.09 |

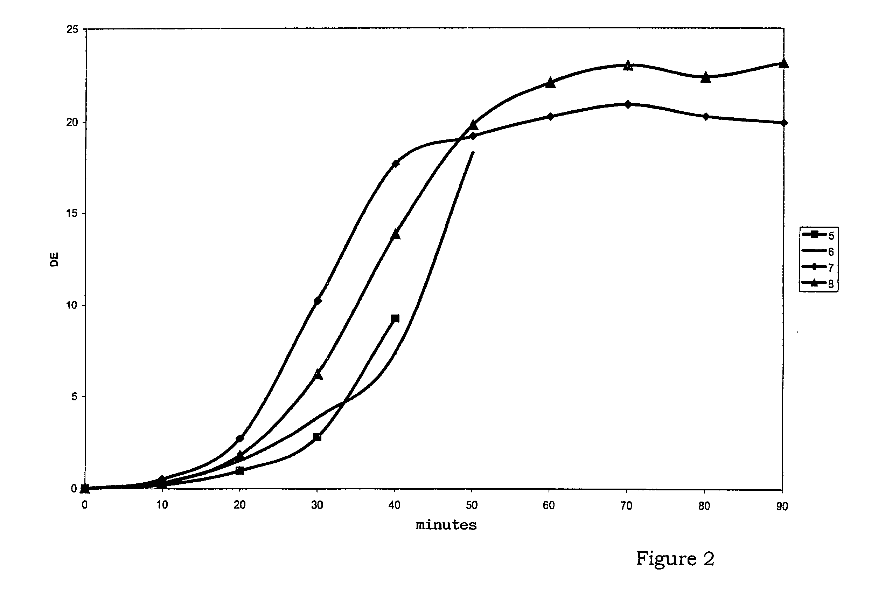

Formulation 8 of the invention presented decidedly better congo red and static thermal stability DE values than comparative formulations 5 and 6. Although formulation 7, which contained an aqueous solution of 50% sodium formate, presented after 50 minutes slightly better degradation values than formulation 8 of the invention, it was found, however, not to be usable in the subsequent procedures due to the presence of water itself. The thermal stability DE values have been shown in graphical form in Figure 2, from which it is deduced that the formulation of the invention presented within 40 minutes better stability values and colour retention than the comparison formulations.

### Example 3

The ingredients in the quantities indicated in Table 5 were homogeneously mixed to prepare the stabilized rigid PVC formulation of example 3. The ingredient quantities in Table 5 are expressed in parts by weight per 100 parts by weight of PVC (phr). The formulations 9 and 10 were comparison formulations while formulation 11 contained the stabilizing composition of the invention.

**Table 5: Ingredients of formulations 9-11**

| | 9 | 10 | 11 |
|---|---|---|---|
| Ingredients | | | |
| PVC258 RD | 100 | 100 | 100 |
| Zinc stearate | 1.1 | 0.7 | 0.7 |
| Calcium stearate | 0.5 | 0.5 | 0.5 |
| THEIC | 0.35 | 0.35 | 0.35 |
| Calcium acetylacetonate | 0.35 | 0.35 | 0.35 |
| Pentaerythrite | 0.5 | 0.5 | 0.5 |
| Arenox A10* | 0.15 | 0.15 | 0.15 |
| Oxidized polyethylene wax | 0.3 | 0.3 | 0.3 |
| 25% sodium perchlorate on silicates | | 0.2 | 0.2 |
| Stabilizing composition of the invention | | | 1.25 |

| | | | |
|---|---|---|---|
| * phenolic antioxidant | | | |

The formulations of Table 5 were subjected to the congo red stability test and static thermal stability test at 190°C. The values indicated in Table 6 were obtained.

**Table 6: Evaluation of formulations 9-11**

| | 9 | 10 | 11 |
|---|---|---|---|
| Congo red (minutes) | 21 | 22 | 35 |

| minutes | DE | DE | DE |
|---|---|---|---|
| 0 | 0 | 0 | 0 |
| 10 | 5.42 | 0.57 | 0.24 |
| 20 | 21.51 | 4.64 | 5.72 |
| 30 | 35.04 | 17.46 | 19.62 |
| 40 | 40.9 | 30.61 | 36.12 |
| 50 | 45.43 | 37.58 | 44.26 |
| 60 | degr | degr | 49.06 |
| 70 | | | 48.16 |
| 80 | | | degr |

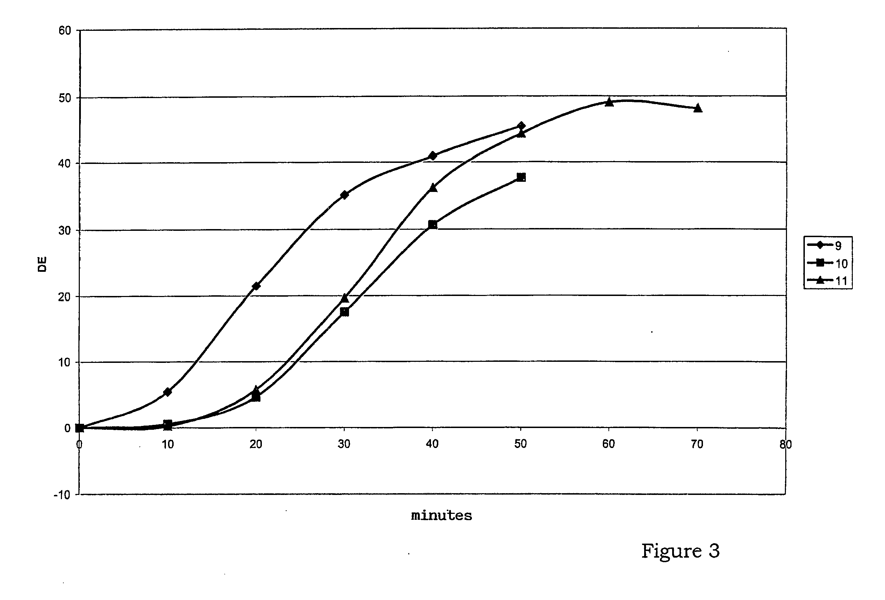

As can be seen from Table 6, the resin of the invention degraded after 70 minutes as opposed to the comparison resins which already degraded after 60 minutes. The DE values have been shown in graphical form in Figure 3, from which it can be deduced that formulation 11, which comprises the stabilizing composition of the invention has a good stability over a period of 70 minutes.

### Example 4

The ingredients in the quantities indicated in Table 7 were homogeneously mixed to prepare the stabilized rigid PVC formulation of example 4. The ingredient quantities in Table 7 are expressed in parts by weight per 100 parts by weight of PVC (phr). Formulation 12 was a comparison formulation and formulation 13 contained the stabilizing composition of the invention.

**Table 7: Ingredients of formulations 12-13**

| | 12 | 13 |
|---|---|---|
| Ingredients | | |
| PVC258 RD | 100 | 100 |
| Calcium stearate | 0.2 | 0.2 |
| Arenox A10* | 0.05 | 0.05 |
| Paraffin at melting point=70°C | 0.3 | 0.3 |
| Paraffin at melting point=105°C | 0.3 | 0.3 |
| Stearic acid | 0.25 | 0.25 |
| 25% sodium perchlorate on silicates | 0.1 | 0.1 |
| Stabilizing composition of the invention | | 0.8 |

| | | |
|---|---|---|
| * phenolic antioxidant | | |

The formulations of Table 7 were subjected to the congo red (CR) stability test and static thermal stability test at 190°C.

The values indicated in Table 8 were obtained.

**Table 8: Evaluation of formulations 12-13**

| | 12 | 13 |
|---|---|---|
| Congo red (minutes) | 5 | 10 |

| Static thermal stability | | |
|---|---|---|
| minutes | DE | DE |
| 0 | 0 | 0 |
| 10 | 15.67 | 7.61 |
| 20 | 32.69 | 25.29 |
| 30 | 33.95 | 28.45 |
| 40 | 35.66 | 28.63 |
| 50 | 38.84 | 26.57 |
| 60 | 40.96 | 26.17 |
| 70 | 42.22 | 27.72 |

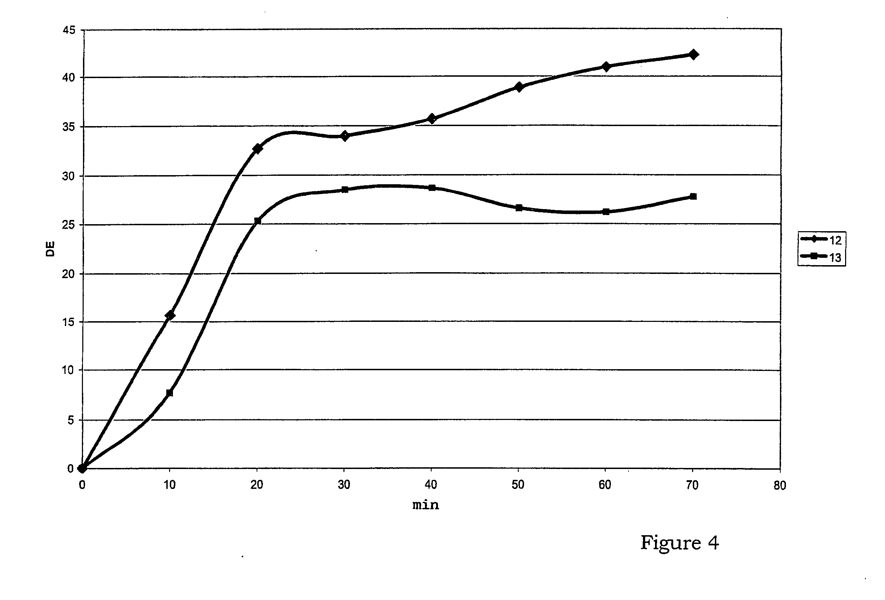

Formulation 13 of the invention therefore presented a thermal stability with a DE value being always lower right from the start of the test than the comparison resin of formulation 12, as is apparent from Figure 4, which gives the DE values over time.

## Claims

1. A composition for stabilizing halogen-containing polymers comprising:
- sodium formate
- at least one C₁₀-C₂₄ fatty acid or a salt thereof with a metal selected from the metals of Groups I and II of the Periodic table, and
- an amorphous synthetic silica with BET area > 50 m²/g
wherein the composition is in the form of a powder having particles with granulometric distribution indices D50, in the range from 2 to 60 µm, and D90 less than or equal to 100 µm.

2. Composition according to claim 1 wherein the C₁₀-C₂₄ fatty acid is selected from the group consisting of lauric acid, stearic acid, oleic acid, elaidic acid, linoleic acid and linolenic acid.

3. Composition according to claim 1 or 2, wherein the metal of the salt of a C₁₀-C₂₄ fatty acid is selected from the groups consisting of sodium, potassium and calcium.

4. Composition according to any one of claims 1 to 3 wherein the salt of a C₁₀-C₂₄ fatty acid is sodium stearate.

5. Composition according to any one of claims 1 to 4 wherein the amorphous synthetic silica has a BET area > 100 m²/g.

6. Composition according to any one of claims 1 to 5 wherein the amorphous synthetic silica is hydrophilic or hydrophobic pyrogenic silica.

7. Composition according to any one of claims 1 to 6 wherein the composition in the form of the powder of the invention has particle size distribution indices D50 from 2 to 40 µm, and D90 of about 50 µm.

8. A process for preparing a composition according to any one of claims 1 to 7, comprising the steps of:
a) preparing a mixture of an aqueous solution of sodium formate, at least one C₁₀-C₂₄ fatty acid or a salt thereof with a metal selected from the metals of Groups I and II of the Periodic table, and an amorphous synthetic silica with BET area > 50 m²/g;
b) removing the water and drying the product thus obtained; and
c) subjecting the product to grinding to obtain a powder having particle size distribution indices D50 in the range from 2 to 60 µm and D90 less than or equal to 100 µm.

9. A halogenated resin in a rigid formulation comprising a halogen-containing polymer, and a stabilizing composition according to any one of claims 1 to 7.

10. A halogenated resin in a plasticized or semi-rigid formulation comprising a halogen-containing polymer, at least one plasticizing substance and a stabilizing composition according to any one of claims 1 to 7.

11. The halogenated resin according to claim 9 or 10, wherein the stabilizing composition comprises sodium formate in an amount in the range from 0.1 to 5 parts by weight per 100 parts by weight of halogen-containing Polymer (phr).

12. The halogenated resin according to claim 11, wherein the stabilizing composition comprises sodium formate in an amount in the range from 0.2 to 1.5 parts by weight per 100 parts by weight of halogen-containing polymer (phr).

13. The halogenated resin according to anyone of claims 9-12, wherein the stabilizing composition comprises the C₁₀-C₂₄ fatty acid or a salt thereof with a metal selected from the metals of Groups I and II of the Periodic table is in an amount in the range from 0.01 to 2 parts by weight, preferably from 0.02 to 0.5 Parts by weight, per 100 Parts by weight of halogen-containing Polymer (phr).

14. The halogenated resin according to anyone of claims 9-13, , wherein the stabilizing composition comprises the amorphous synthetic silica is present in an amount in the range from 0.001 to 0.25 parts by weight, per 100 parts by weight of halogen-containing polymer (phr).

15. The halogenated resin according to claims 9 or 10 wherein the halogen-containing polymer is polyvinylchloride (PVC).

16. A The halogenated resin according to anyone of claims 9 to 15 wherein the resin comprises one or more conventional stabilizing and co-stabilizing agents selected from the groups consisting of metal soaps, organo-tin compounds, perchlorates and perfluoroalkanesulphonates, sodium adipate, antioxidants, alkanolamines, zeolites and hydrotalcites, hydrates and oxides of alkali and alkaline-earth metals, polyols, organic phosphites, ß-aminocrotonic acid esters and organic co-stabilizers selected from b-diketones, acetylacetonates, dihydropyridines, polydihydropyridines and uracil derivatives.

17. The halogenated resin according to anyone of claims 9 to 16 wherein the resin comprises additives selected from the group consisting of dyes, pigments, antiflame agents, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing, and exposure to light.

## Patentansprüche

1. Zusammensetzung zum Stabilisieren von Halogen enthaltenden Polymeren enthaltend:
- Natriumformat,
- wenigstens eine C₁₀-C₂₄-Fettsäure oder ein Salz hiervon mit einem Metall ausgewählt aus den Metallen der Gruppen I und II des Periodensystems und
- amorphes synthetisches Silica mit einer BET-Oberfläche von größer als 50 m²/g,
wobei die Zusammensetzung in der Form eines Pulvers mit Partikeln mit granulometrischen Verteilungsindizes D50 in einem Bereich zwischen 2 und 60 µm und D90 von weniger als oder gleich 100 µm vorliegt.

2. Zusammensetzung nach Anspruch 1, wobei die C₁₀-C₂₄-Fettsäure aus der Gruppe ausgewählt ist, welche aus Laurinsäure, Stearinsäure, Ölsäure, Elaidinsäure, Leinölsäure und Linolensäure besteht.

3. Zusammensetzung nach Anspruch 1 oder 2, wobei das Metall des Salzes der C₁₀-C₂₄-Fettsäure aus den Gruppen bestehend aus Natrium, Kalium und Calcium ausgewählt ist.

4. Zusammensetzung nach einem der Ansprüche 1 bis 3, wobei das Salz der C₁₀-C₂₄-Fettsäure Natriumstearat ist.

5. Zusammensetzung nach einem der Ansprüche 1 bis 4, wobei das amorphe synthetische Silica eine BET-Oberfläche von größer als 100 m²/g aufweist.

6. Zusammensetzung nach einem der Ansprüche 1 bis 5, wobei das amorphe synthetische Silica hydrophiles oder hydrophobes pyrogenes Silica ist.

7. Zusammensetzung nach einem der Ansprüche 1 bis 6, wobei die Zusammensetzung in der Form von Pulver gemäß der vorliegenden Erfindung Partikelgrößenverteilungsindizes D50 von 2 bis 40 µm und D90 von ungefähr 50 µm aufweist.

8. Verfahren zum Herstellen einer Zusammensetzung nach einem der Ansprüche 1 bis 7 umfassend die Schritte:
a) Herstellen einer Mischung aus einer wässrigen Lösung aus Natriumformat, wenigstens einer C₁₀-C₂₄-Fettsäure oder eines Salzes hiervon mit einem Metall ausgewählt aus den Metallen der Gruppen I und II des Periodensystems und eines amorphen synthetischen Silicas mit einer BET-Oberfläche von größer als 50 m²/g,
b) Entfernen des Wassers und Trocknen des so erhaltenen Produkts und
c) Unterwerfen des Produktes gegenüber Mahlen, um ein Pulver mit Partikelgrößenverteilungsindizes D50 in einem Bereich zwischen 2 und 60 µm und D90 von weniger als oder gleich 100 µm zu erhalten.

9. Halogeniertes Harz in einer steifen Formulierung enthaltend ein Halogen enthaltendes Polymer und eine stabilisierende Zusammensetzung nach einem der Ansprüche 1 bis 7.

10. Halogeniertes Harz in einer weichmacherhaltigen oder halbsteifen Formulierung enthaltend ein Halogen enthaltendes Polymer, wenigstens eine weichmachende Substanz und eine stabilisierende Zusammensetzung nach einem der Ansprüche 1 bis 7.

11. Halogeniertes Harz nach Anspruch 9 oder 10, wobei die stabilisierende Zusammensetzung Natriumformat in einer Menge in einem Bereich zwischen 0,1 und 5 Gewichtsteilen bezogen auf 100 Gewichtsteile von Halogen enthaltendem Polymer (phr) enthält.

12. Halogeniertes Harz nach Anspruch 11, wobei die stabilisierende Zusammensetzung Natriumformat in einer Menge in einem Bereich zwischen 0,2 und 1,5 Gewichtsteilen bezogen auf 100 Gewichtsteile von Halogen enthaltendem Polymer (phr) enthält.

13. Halogeniertes Harz nach einem der Ansprüche 9 bis 12, wobei die stabilisierende Zusammensetzung eine C₁₀-C₂₄-Fettsäure oder ein Salz hiervon mit einem Metall ausgewählt aus den Metallen der Gruppen I und II des Periodensystems in einer Menge in einem Bereich zwischen 0,01 und 2 Gewichtsteilen, vorzugsweise zwischen 0,02 und 0,5 Gewichtsteilen, bezogen auf 100 Gewichtsteile von Halogen enthaltendem Polymer (phr) enthält.

14. Halogeniertes Harz nach einem der Ansprüche 9 bis 13, wobei die stabilisierende Zusammensetzung das amorphe synthetische Silica in einer Menge in einem Bereich zwischen 0,001 und 0,25 Gewichtsteilen bezogen auf 100 Gewichtsteile von Halogen enthaltendem Polymer (phr) enthält.

15. Halogeniertes Harz nach Anspruch 9 oder 10, wobei das Halogen enthaltende Polymer Polyvinylchlorid (PVC) ist.

16. Halogeniertes Harz nach einem der Ansprüche 9 bis 15, wobei das Harz ein oder mehrere herkömmliche Stabilisierungsmittel und Co-Stabilisierungsmittel enthält, welche aus der Gruppe ausgewählt sind, welche besteht aus Metallseifen, Organozinnverbindungen, Perchloraten und Perfluoralkansulfonaten, Natriumadipat, Antioxidationsmitteln, Alkanolaminen, Zeolithen und Hydrotalciten, Hydraten und Oxiden von Alkali- und Erdalkalimetallen, Polyolen, organischen Phosphiten, β-Aminocrotonsäureestern und organischen Co-Stabilisierungsmitteln, welche aus β-Diketonen, Acetylacetonaten, Dihydropyridinen, Polydihydropyridinen und Uracilderivaten ausgewählt sind.

17. Halogeniertes Harz nach einem der Ansprüche 9 bis 16, wobei das Harz Additive enthält, welche aus der Gruppe ausgewählt sind, welche aus Farbstoffen, Pigmenten, Flammschutzmitteln, inneren und/oder äußeren Schmierstoffen, Schlagzähigkeitsverbesserern, Verfahrenshilfsmitteln, Licht- und Ultraviolettstrahlung-Stabilisierungsmitteln, Fluoreszenz-Bleichmitteln, Füllstoffen, Gelierungsmitteln, antistatischen Mitteln, Antitrübungsmitteln, Expandern und anderen Additiven besteht, um durch Erhitzen, Altern und Aussetzung gegenüber Licht verursachter Zersetzung vorzubeugen, zu maskieren oder zu verringern.

## Revendications

1. Composition pour stabiliser des polymères contenant un halogène, comprenant :
- du formate de sodium,
- au moins un acide gras en C₁₀-C₂₄ ou son sel avec un métal choisi parmi les métaux des Groupes I et II de la Table Périodique, et
- une silice synthétique amorphe avec une surface BET > 50 m²/g,
dans laquelle la composition est sous la forme d'une poudre ayant des particules avec des indices de distribution granulométrique D50 dans la gamme de 2 à 60 µm, et D90 inférieurs ou égaux à 100 µm.

2. Composition selon la revendication 1, dans laquelle l'acide gras en C₁₀-C₂₄ est choisi dans le groupe constitué d'acide laurique, d'acide stéarique, d'acide oléique, d'acide élaïdique, d'acide linoléique et d'acide linolénique.

3. Composition selon les revendications 1 ou 2, dans laquelle le métal du sel d'un acide gras en C₁₀-C₂₄ est choisi dans les groupes constitués de sodium, potassium et calcium.

4. Composition selon l'une quelconque des revendications 1 à 3, dans laquelle le sel d'un acide gras en C₁₀-C₂₄ est un stéarate de sodium.

5. Composition selon l'une quelconque des revendications 1 à 4, dans laquelle la silice synthétique amorphe a une surface BET > 100 m²/g.

6. Composition selon l'une quelconque des revendications 1 à 5, dans laquelle la silice synthétique amorphe est une silice pyrogène hydrophile ou hydrophobe.

7. Composition selon l'une quelconque des revendications 1 à 6, dans laquelle la composition sous la forme de poudre de l'invention a des indices de répartition de taille de particules D50 de 2 à 40 µm, et D90 d'environ 50 µm.

8. Procédé de préparation d'une composition selon l'une quelconque des revendications 1 à 7, comprenant les étapes consistant à :
a) préparer un mélange d'une solution aqueuse de formate de sodium, d'au moins un acide gras en C₁₀-C₂₄ ou son sel avec un métal choisi parmi les métaux des Groupes I et II de la table périodique, et d'une silice synthétique amorphe avec une surface BET > 50 m²/g ;
b) enlever l'eau et sécher le produit ainsi obtenu ; et
c) soumettre le produit à un broyage pour obtenir une poudre ayant des indices de distribution de taille de particule D50 dans la gamme de 2 à 60 µm et D90 inférieurs ou égaux à 100 µm.

9. Résine halogénée dans une formulation rigide comprenant un polymère contenant un halogène, et une composition de stabilisation selon l'une quelconque des revendications 1 à 7.

10. Résine halogénée dans une formulation plastifiée ou semi-rigide comprenant un polymère contenant un halogène, au moins une substance plastifiante et une composition de stabilisation selon l'une quelconque des revendications 1 à 7.

11. Résine halogénée selon la revendication 9 ou 10, dans laquelle la composition de stabilisation comprend du formate de sodium dans une quantité allant de 0,1 à 5 parties en poids pour 100 parties en poids de polymère contenant un halogène (phr).

12. Résine halogénée selon la revendication 11, dans laquelle la composition de stabilisation comprend du formate de sodium, dans une quantité allant de 0,2 à 1,5 partie en poids pour 100 parties en poids de polymère contenant un halogène (phr).

13. Résine halogénée selon l'une quelconque des revendications 9-12, dans laquelle la composition de stabilisation comprend l'acide gras en C₁₀-C₂₄ ou son sel avec un métal choisi parmi les métaux des Groupes I et II de la Table périodique, dans une quantité allant de 0,01 à 2 parties en poids, de préférence de 0,02 à 0,5 partie en poids, pour 100 parties en poids de polymère contenant un halogène (phr).

14. Résine halogénée selon l'une quelconque des revendications 9-13, dans laquelle la composition de stabilisation comprend la silice synthétique amorphe qui est présente dans une quantité allant de 0,001 à 0,25 partie en poids pour 100 parties en poids de polymère contenant un halogène (phr).

15. Résine halogénée selon les revendications 9 ou 10, dans laquelle le polymère contenant un halogène est un chlorure de polyvinyle (PVC).

16. Résine halogénée selon l'une quelconque des revendications 9 à 15, dans laquelle la résine comprend un ou plusieurs agents de stabilisation et de co-stabilisation conventionnels choisis dans des groupes constitués de savons métalliques, de composés d'organoétain, de perchlorates et perfluoroalcanesulfonates, d'adipate de sodium, d'antioxydants, d'alcanolamines, de zéolites et d'hydrotalcites, d'hydrates et d'oxydes de métaux alcalins et alcalino-terreux, de polyols, de phosphites organiques, d'esters d'acide bêta-aminocrotoniques et d'agent co-stabilisants organiques choisis parmi les b-dicétones, les acétylacétonates, les dihydropyridines, les polydihydropyridines et les dérivés d'uracil.

17. Résine halogénée selon l'une quelconque des revendications 9 à 16, dans laquelle la résine comprend des additifs choisis dans le groupe constitué de colorants, pigments, agents anti-inflammation, lubrifiants internes et/ou externes, modificateurs d'impact, adjuvants de traitement, stabilisateurs de rayonnement lumineux et ultraviolet, agents blanchissants fluorescents, charges, agents gélifiants, agents antistatiques, agents antivoile, expanseurs et autres additifs pour empêcher, masquer ou réduire la détérioration causée par le chauffage, le vieillissement et l'exposition à la lumière.
